# EUROPEAN PATENT APPLICATION

(11) **EP 4 826 356 A1**
(43) Date of publication of application: **21.10.2026**
(21) Application number: 26168959.0
(22) Date of filing: 30.03.2026
(51) Int. Cl.: G01N 15/1429, G01N 15/10, G01N 15/14

(54) **FLOW CYTOMETER DYNAMIC RANGE VISUALIZATION**

(30) Priority: 16.04.2025 US 202519180984
(71) Applicant: BECTON, DICKINSON AND COMPANY, Franklin Lakes NJ 07417-1880 (US)
(72) Inventor: WELSH, Joshua Aden, Walnut Creek, 94597 (US); MAGE, Peter Ludington, San Jose, 95124 (US)
(74) Representative: v. Bezold & Partner Patentanwälte - PartG mbB

(57) **Abstract**

The present disclosure provides methods of visualizing a dynamic range of a flow cytometer. Methods of interest include: detecting light from a particle in a sample in a flow stream with a light detection system including a photodetector; generating one or more data signals in response to the detected light; generating a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and displaying the plot of cytometric data generated for the sample on a visual display.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

The ability of a flow cytometer to produce consistent output signals for the same input sample on a day-to-day basis depends on various factors, including temperature and optomechanical alignment, both of which can fluctuate over time. To maintain performance, manufacturers have traditionally relied on daily quality control (QC) procedures to establish detector gain settings. These procedures typically involve adjusting detector gain to shift the output signal of a reference bead on an arbitrary unit scale, ensuring that its mean fluorescence intensity (MFI) remains consistent over time. However, as the demand for standardized flow cytometry increases, real-time calibration and data normalization approaches have gained interest. One promising approach is quantitative scaling, which enables photodetector data to be expressed in standardized quantitative units. The use of quantitative scaling offers a user the potential to both maintain consistent performance over time while optimizing the signal-to-noise ratio (SNR)-enhancing overall data quality.

### SUMMARY

The present inventors have realized that improvements can be made to the processes by which flow cytometers are calibrated and flow cytometric data is normalized. In particular, it was realized that, while conventional calibration methods such as, e.g., those implementing arbitrary unit scales intuitively allow a user to ascertain if the sample population(s) of an experiment are within the optimal dynamic detection range of a detector (i.e., by visually inspecting the relative position of each population between the top and the bottom of the arbitrary unit scale), cytometric data scaled and displayed via quantitative unit scales are independent from the bit-depth of a given flow cytometer system. This results in difficulties determining the relative position of population(s) within the detector's dynamic detection range, which can, in turn, negatively impact detector sensitivity, population resolution, and the overall accuracy and reproducibility of experimental results, among other issues. As such, the inventors realized that methods and techniques for intuitively providing the dynamic detection range of a photodetector to a user (e.g., during instrument calibration) are desirable. Particularly, automated processes are needed for updating and displaying the detection window of a photodetector in real-time, e.g., as cytometric data is obtained and detector settings are adjusted. Embodiments of the present disclosure satisfy these needs and desires.

In one aspect, methods of displaying cytometric data for a user including, e.g., a dynamic range of the flow cytometer used to generate the cytometric data are provided. Aspects of the methods include: detecting light from a particle in a sample in a flow stream with a light detection system including a photodetector; generating one or more data signals in response to the detected light; generating a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and displaying the plot of cytometric data generated for the sample on a visual display. In some embodiments, the quantitative intensity units are independent of photodetector settings.

In certain embodiments, the one or more data signals correspond to a pulse height of the particle. In some embodiments, the one or more data signals correspond to a pulse-area of the particle. In these instances, the minimum and maximum intensity values of the detection range may be determined using a pulse-area to height ratio. In some embodiments, the method further includes calculating the pulse-area to height ratio by: generating data signals from light detected from an irradiated reference particle; determining a pulse-area from the generated data signals; determining a pulse height from the generated data signals; and calculating the pulse-area to height ratio by dividing the pulse-area by the pulse height. In some embodiments, the reference particle includes a multi-spectral fluorescence bead.

In certain embodiments, the one or more data signals of the sample particle are transformed into quantitative intensity units using a scaling factor, wherein the scaling factor includes a detector gain of the photodetector. In these embodiments, the minimum and maximum intensity values of the detection range are determined using the scaling factor. In some embodiments, the scaling factor includes a calibration factor, and the one or more data signals are transformed into the quantitative intensity units by: normalizing the data signals with the detector gain to generate gain-normalized data signals; and adjusting the gain-normalized data signals with the calibration factor to generate calibrated data signals.

In certain embodiments, the method further includes calculating the calibration factor by adjusting gain-normalized data signals generated from light detected from an irradiated reference particle to a predetermined mean fluorescence intensity (MFI). For example, the calibration factor may be calculated by: determining linear gain as a function of photodetector voltage; determining the gain corresponding to the predetermined MFI for data signals generated from light detected from the irradiated reference particle; and calculating the calibration factor which adjusts the generated gain-normalized reference data signals to the predetermined MFI. In some embodiments, the method further includes determining the linear gain as a function of photodetector voltage by: irradiating the photodetector with a light source at a plurality of different intensities; detecting light from the light source at the plurality of different intensities at a plurality of different photodetector voltages; and determining detector gain settings for the photodetector sufficient to generate an MFI that increases linearly with the detector gain.

In certain embodiments, the method further includes adjusting a setting of the photodetector. For example, a setting of the photodetector may be adjusted by: receiving an adjustment for the photodetector, wherein the adjustment includes a change in the gain of the photodetector to an adjusted gain; adjusting the gain of the photodetector to the adjusted gain; and rescaling the minimum and maximum intensity values of the detection range using the change in the gain of the photodetector. In some embodiments, the adjustment is received from a user. In some embodiments, the setting of the photodetector is adjusted in order to maximize a signal-to-noise ratio (SNR) for the sample. In some embodiments, the method further comprises including cytometric data generated for particles of the sample after adjusting the setting of the photodetector on the plot by: generating data signals in response to light detected from irradiated particles of the sample after adjusting the setting of the photodetector; transforming the data signals into the quantitative intensity units using the change in the gain of the photodetector; and plotting the transformed data signals on the plot.

In certain embodiments, the minimum and maximum intensity values of the detection range are indicated by visual indicators marking the quantitative unit axis of the plot at the minimum and maximum intensity values. In these instances, the visual indicators may include a first visual indicator including a line perpendicular to the quantitative unit axis at the minimum intensity value, and a second visual indicator including a line perpendicular to the quantitative unit axis at the maximum intensity value. In some embodiments, the minimum and maximum intensity values of the detection range are indicated by shading a region of the plot between the minimum and maximum intensity values along the quantitative unit axis. In some embodiments, the minimum and maximum intensity values of the detection range are indicated by shading a region of the plot corresponding to values below the minimum intensity value and above the maximum intensity value along the quantitative unit axis.

In certain embodiments, the plot is a histogram representing fluorescence intensity values in quantitative intensity units on a first axis and corresponding particle counts on a second axis. In other embodiments, the plot is a dot plot including: a first axis representing fluorescence intensity values in quantitative intensity units obtained using data signals generated from light detected by the photodetector; and a second axis representing fluorescence intensity values obtained using data signals generated from light detected by a second photodetector. In some embodiments, the plot of cytometric data is generated and displayed in real time. In these embodiments, the method may further include updating the displayed plot of cytometric data in real time. For example, the displayed plot of cytometric data may be updated to reflect an adjustment of a setting of the photodetector, or to include cytometric data generated for additional particles of the sample.

In another aspect, flow cytometers configured to display a dynamic range of a light detection system of the cytometer, e.g., according to any of the methods described above and herein, are provided. Flow cytometers of interest include: a light source configured to irradiate a sample including a particle in a flow stream; a light detection system including a photodetector for detecting light from the irradiated particle; and a processor including memory operably coupled to the processor wherein the memory includes instructions stored thereon, which when executed by the processor, cause the processor to: generate one or more data signals in response to the detected light; generate a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and display the plot of cytometric data generated for the sample on a visual display. In some embodiments, the flow cytometer further includes a display device operably connected to the processor and configured to display the plot of cytometric data. In some instances, the flow cytometer further includes an operator input device operably connected to the processor and configured to receive an adjustment of a setting of the photodetector from a user.

In another aspect, systems for performing the methods of displaying cytometric data for a user, e.g., as described above and herein, are provided. Further, non-transitory computer readable storage media including the instructions of the memory of the systems, and kits including one or more of the system components and/or the non-transitory computer readable storage media, are also provided.

### BRIEF DESCRIPTION OF THE FIGURES

The disclosure may be best understood from the following detailed description when read in conjunction with the accompanying drawings. Included in the drawings are the following figures:
**FIG. 1A** depicts a flow diagram for practicing methods of visualizing a dynamic range of a light detection system of a flow cytometer according to certain embodiments. **FIG. 1B** depicts a display of cytometric data indicating a dynamic range of the flow cytometer used to generate the cytometric data according to certain embodiments. **FIG. 1C** depicts a flow diagram for practicing methods of calibrating a flow cytometer according to certain embodiments.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIG. 7** depicts aspects of a computer-controlled system according to certain embodiments.

### DETAILED DESCRIPTION

The present disclosure provides methods of visualizing a dynamic range of a flow cytometer. Methods of interest include: detecting light from a particle in a sample in a flow stream with a light detection system including a photodetector; generating one or more data signals in response to the detected light; generating a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and displaying the plot of cytometric data generated for the sample on a visual display. The subject methods may be implemented automatically via computer. Flow cytometers, systems, and non-transitory computer-readable storage media for carrying out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### METHODS OF DYNAMIC RANGE VISUALIZATION

As described above, methods of displaying cytometric data for a user including, e.g., a dynamic range of the flow cytometer used to generate the cytometric data are provided. Aspects of the methods include: detecting light from a particle in a sample in a flow stream with a light detection system including a photodetector; generating one or more data signals in response to the detected light; generating a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and displaying the plot of cytometric data generated for the sample on a visual display. In some embodiments, the quantitative intensity units are independent of photodetector settings.

As used herein, "bit-depth" refers to the number of bits used to digitize analog signals (e.g., turn detected light into discrete digital signals). In this way, the bit-depth of a system (e.g., the light detection system), or a specific component thereof (e.g., the photodetector), defines the number of discrete intensity levels or channels capable of being represented by the system. For example, an 18-bit system would have a bit-depth of 2¹⁸, or 262,144 discrete intensity levels or channels. In other words, bit-depth determines the resolution of a given light detection system or photodetector thereof. Accordingly, the lowest intensity level of the bit-depth corresponds to the smallest electric signal output by the photodetector that is quantized by the system's analog-to-digital converter (ADC) or the "first" channel of the bit-map (i.e., the lowest measurable signal above "no signal" or channel zero). Similarly, the highest intensity level of the bit-depth corresponds to the maximum analog input signal (i.e., the maximum electric signal output by the photodetector) that the ADC can accurately digitize without saturation (i.e., the upper limit of the analog input voltage range the ADC is configured to handle). However, because any signal exceeding this maximum input will also be assigned to the highest intensity level, the highest intensity level of the bit-depth is often indicative of saturation.

During calibration of a given instrument (e.g., the light detection system or the photodetector thereof), the discrete intensity levels, or channels, of the instrument's bit-depth (or, more specifically, the ADC thereof), are tied or mapped to values of a unit scale (e.g., an arbitrary unit scale or a quantitative unit scale, as discussed above). When an arbitrary unit scale is used, the arbitrary scale is generally created or adjusted such that the lowest and highest intensity levels of a photodetector's bit-depth are inherently at or near the very beginning and the very end of the arbitrary unit scale, respectively. In other words, as the minimum and maximum values of the arbitrary unit scale are intrinsically tied to, or associated with, the lowest and highest intensity levels of a photodetector's bit-depth-the arbitrary unit scale itself can be viewed as a proxy of the dynamic range of the photodetector. This allows a user to intuitively know if particles of a sample optimally fall within the dynamic detection range of the photodetector. However, when a quantitative unit scale is used-as is the case for the subject methods-the scaling of data signals is no longer related to a photodetector's bit-depth. Accordingly, before the minimum and maximum intensity values of the detection range of the photodetector are indicated on the quantitative unit axis (i.e., as described above and herein), a user cannot visually intuit if particles of a sample fall within an optimal range of the dynamic detection range of the photodetector-effectively making calibration more difficult and negatively impacting detector sensitivity, population resolution, and the overall accuracy and reproducibility of experimental results, among other issues.

In some embodiments, the generated data signals are the digital signals generated by the ADC, e.g., as described above. In other words, in some instances, the generated data signals correspond to, or directly represent, the discrete intensity levels or channels of the bit-depth (or, e.g., in the case of pulse-area, summations thereof, as described below). In these instances, the same transformation applied to the data signals (i.e., in order to represent the data signals on the quantitative unit axis) may be applied to the lowest and highest intensity level of the bit-depth in order to determine the minimum and maximum intensity value of the detection range of the photodetector on the quantitative unit axis.

As described above, embodiments of the methods include generating one or more data signals in response to the light detected by a light detection system (and, e.g., photodetector thereof) from a sample particle in a flow stream. In some embodiments, the one or more data signals correspond to a pulse height of the particle. In other words, in some instances, the one or more data signals may correspond to the peak value, or maximum amplitude, of the electrical signal generated by the photodetector in response to light emitted or scattered by the particle, e.g., as it passes through a detection region (i.e., the highest channel of the bit-depth achieved or reached by the particle).

In some embodiments, the one or more data signals correspond to a pulse-area of the particle. That is, in some cases, the one or more data signals correspond to the integrated value of the electrical signal generated by the photodetector over time as a particle passes through the laser beam (i.e., the sum of all signal amplitudes of the photodetector during, e.g., the time a particle is in the detection region), representing the total detected light from the particle or, i.e., the sum of the bit-depth channels sampled for the particle. In these instances, the minimum and maximum intensity values of the detection range may be determined using a pulse-area to height ratio. For example, the minimum and maximum intensity values may be determined by dividing the lowest and highest intensity levels defined by the photodetector's bit-depth by the pulse-area to height ratio before applying the transformation of the quantitative scale to each quotient. In some embodiments, the method further includes calculating the pulse-area to height ratio by: generating data signals from light detected from an irradiated reference particle; determining a pulse-area from the generated data signals; determining a pulse height from the generated data signals; and calculating the pulse-area to height ratio by dividing the pulse-area by the pulse height.

In some embodiments, the reference particle includes a multi-spectral fluorescence bead. In these instances, the multi-spectral fluorescence bead may include a fluorescent dye component that is covalently bonded to a particle. In some embodiments, the particles are beads, such as structures having a diameter in the nanometer to micrometer range, such as from 0.01 to 1,000 µm in diameter, for example from 0.1 to 100 µm in diameter, and including from 1 to 100 µm in diameter, and, for use in flow cytometry, including from about 1 to 10 µm in diameter. Such particles can be of any shape, and in some instances are approximately spherical.

In some embodiments, the particles (i.e., of the multi-spectral fluorescence beads) can be made of any appropriate material (or combinations thereof), including, but not limited to polymers such as polystyrene; polystyrene which contains other copolymers such as divinylbenzene; polymethylmethacrylate (PMMA); polyvinyltoluene (PVT); copolymers such as styrene/butadiene, styrene/vinyltoluene; latex; glasses; or other materials, such as silica (e.g., SiO2). Of interest in some embodiments are particles, e.g., beads, such as glass beads, having low or no auto-fluorescence. In some embodiments, the beads are a metal organic polymer matrix, for example an organic polymer matrix that has a backbone structure that contains a metal such as aluminum, barium, antimony, calcium, chromium, copper, erbium, germanium, iron, lead, lithium, phosphorus, potassium, silicon, tantalum, tin, titanium, vanadium, zinc or zirconium. In some instances, the porous metal organic matrix is an organosiloxane polymer including but not limited to polymers of methyltrimethoxysilane, dimethyldimethoxysilane, tetraethoxysilane, methacryloxypropyltrimethoxysilane, bis(triethoxysilyl)ethane, bis(triethoxysilyl)butane, bis(triethoxysilyl)pentane, bis(triethoxysilyl)hexane, bis(triethoxysilyl)heptane, bis(triethoxysilyl)octane, and combinations thereof.

Reference particles of interest may be porous or non-porous. In some embodiments, the particles are non-porous. In other embodiments, the particles are porous, such as where the particles have pores with diameters that range from 0.01 nm to 1000 nm, such as from 0.05 nm to 750 nm, such as from 0.1 nm to 500 nm, such as from 0.5 nm to 250 nm, such as from 1 nm to 100 nm, such as from 5 nm to 75 nm and including particles having pores having diameters that range from 10 nm to 50 nm. In some instances, the fluorescently labeled beads of interest include, but are not limited to, fluorescently labelled polystyrene beads, fluorescein beads, rhodamine beads, and other beads tagged with a fluorescent dye. Additional examples of fluorescently labeled beads are described in U.S. Pat. Nos. 6,350,619; 7,738,094; and 8,248,597, the disclosures of each of which are herein incorporated by reference in their entirety.

In certain embodiments, the one or more data signals of the sample particle are transformed into quantitative intensity units using a scaling factor, wherein the scaling factor includes a detector gain of the photodetector. In these cases, the scaling factor may account for (i.e., normalize for) the real-time gain of the photodetector as the photodetector generates analog (i.e., electric) signals from detected light (the analog signals being converted into digital data signals by an ADC). In other words, the scaling factor may provide for sample quantitative intensity units (e.g., MFIs) being maintained irrespective of gain settings, such that the quantitative intensity scale used (e.g., to represent MFI) would correspond to the true intensity of an input signal. In some embodiments, the scaling factor divides the data signal(s) by the gain of the photodetector. In some embodiments, the minimum and maximum intensity values of the detection range is determined using the scaling factor.

In some embodiments, the scaling factor includes a calibration factor, and the one or more data signals are transformed into the quantitative intensity units by: normalizing the data signals with the detector gain to generate gain-normalized (i.e., gain independent) data signals; and adjusting the gain-normalized data signals with the calibration factor to generate calibrated data signals. In certain embodiments, the method further includes calculating the calibration factor (i.e., of the scaling factor) by adjusting gain-normalized data signals generated from light detected from an irradiated reference particle to a predetermined mean fluorescence intensity (MFI). For example, the calibration factor may be calculated by: determining linear gain as a function of photodetector voltage; determining the gain corresponding to the predetermined MFI for data signals generated from light detected from the irradiated reference particle; and calculating the calibration factor which adjusts the generated gain-normalized reference data signals to the predetermined MFI.

In some embodiments, the calibration factor is calculated at multiple different points in time such as, e.g., on a routine basis. For example, for a given instrument (e.g., the light detection system and photodetector thereof), the calibration factor may be calculated every set number of days, or every set number of uses, to account for system drift. In some embodiments, the linear gain may be derived from a look-up table. In some embodiments, the reference particle may include a multi-spectral fluorescence bead (e.g., as described above). In some embodiments, the method further includes determining the linear gain as a function of photodetector voltage by: irradiating the photodetector with a light source at a plurality of different intensities; detecting light from the light source at the plurality of different intensities at a plurality of different photodetector voltages; and determining detector gain settings for the photodetector sufficient to generate an MFI that increases linearly with the detector gain.

In certain embodiments, the method further includes adjusting a setting of the photodetector. For example, a setting of the photodetector may be adjusted by: receiving an adjustment for the photodetector, wherein the adjustment includes a change in the gain of the photodetector to an adjusted gain; adjusting the gain of the photodetector to the adjusted gain; and rescaling the minimum and maximum intensity values of the detection range using the change in the gain of the photodetector. In some embodiments, the adjustment (i.e., of the photodetector) is received from a user. In some embodiments, the setting of the photodetector is adjusted in order to maximize a signal-to-noise ratio (SNR) for the sample. For example, when calibrating the light detection system, a user may discern from the minimum and maximum intensity values of the detection range of the photodetector indicated on the quantitative unit axis (i.e., as described above and herein) that data signals represented on the axis (i.e., corresponding to particles of a sample) do not optimally fall within the dynamic detection range of the photodetector such that the full dynamic detection range of the photodetector is effectively used. In these cases, the user may adjust the gain of the photodetector such that a larger amount of the dynamic detection range is effectively utilized and/or such that there is sufficient space between the data signals represented on the axis (i.e., after transformation) and the detection threshold (i.e., the lower limit of detection) and/or the saturation point of the photodetector.

In some embodiments, the method further comprises including cytometric data generated for particles of the sample after adjusting the setting of the photodetector on the plot by: generating data signals in response to light detected from irradiated particles of the sample after adjusting the setting of the photodetector; transforming the data signals into the quantitative intensity units using the change in the gain of the photodetector; and plotting the transformed data signals on the plot. In this way, a user may continuously adjust the photodetector (e.g., through multiple incremental changes to the photodetector's gain) until signal-to-noise ratio (SNR) has effectively been optimized. In some embodiments, the method includes adjusting the gain setting of the photodetector by 0.01 dB or more, such as, e.g., by 0.05 dB or more, or 0.1 dB or more, or 0.5 dB or more, or 1 dB or more, or 2 dB or more, or 3 dB or more, or 5 dB or more, or 10 dB or more.

In certain embodiments, the minimum and maximum intensity values of the detection range are indicated by visual indicators marking the quantitative unit axis of the plot at the minimum and maximum intensity values. In these instances, the visual indicators may include a first visual indicator including a line perpendicular to the quantitative unit axis at the minimum intensity value, and a second visual indicator including a line perpendicular to the quantitative unit axis at the maximum intensity value. In some embodiments, the minimum and maximum intensity values of the detection range are indicated by shading a region of the plot between the minimum and maximum intensity values along the quantitative unit axis. In some embodiments, the minimum and maximum intensity values of the detection range are indicated by shading a region of the plot corresponding to values below the minimum intensity value and above the maximum intensity value along the quantitative unit axis.

The shading, as described above, may be in any color or tone. In some embodiments, the color and tone of the shading is configured to directly contrast with the unshaded regions of the plot. In some embodiments, the color and tone of the shading is configured to directly contrast with the cytometric data represented on the plot (i.e., the data signals represented on the plot).

In some embodiments, the visual indicators may include markers placed directly on a labeled axis line of the quantitative axis at the minimum and maximum intensity values. By labeled axis line is meant a line with regularly spaced tick marks and numeric labels indicating the scale of the axis. In some embodiments, the visual indicator markers may include, but are not limited to, stars, triangles, squares, circles, or any other shape for intuitively indicating the upper and lower limits of the dynamic detection range of the photodetector to the user. Similarly, visual indicator markers may be in any color or tone.

As described above, the lowest intensity level of the bit-depth corresponds to the smallest electric signal output by the photodetector that is quantized by the system's ADC, and the highest intensity level of the bit-depth corresponds to the maximum analog input signal that the ADC can accurately digitize without saturation, wherein the minimum and maximum intensity value of the photodetector detection range correspond to the lowest and highest intensity level defined by the bit-depth. In some embodiments, the minimum and maximum intensity values directly represent the lowest and highest intensity levels defined by the bit-depth on the quantitative unit axis. In other embodiments, the minimum and maximum intensity values represent values near the lowest and highest intensity levels defined by the bit-depth on the quantitative unit axis. For example, in some instances, the gain settings of the photodetector may be adjusted such that the first several intensity levels or channels of the bit-depth reflect background noise. In these cases, the minimum intensity value may be directly tied to (i.e., may represent) the first intensity level or channel of the bit-depth distinguishable from background noise. In this way, the minimum and maximum intensity value may be configured to more accurately reflect the usable detection range of the photodetector.

In certain embodiments, the plot is a histogram representing fluorescence intensity values in quantitative intensity units on a first axis and corresponding particle counts on a second axis. In other embodiments, the plot is a dot plot including: a first axis representing fluorescence intensity values, in quantitative intensity units, obtained using data signals generated from light detected by the photodetector; and a second axis representing fluorescence intensity values obtained using data signals generated from light detected by a second photodetector. In some embodiments, the second axis is expressed in quantitative intensity units. In these instances, the method may include indicating the minimum and maximum intensity values of the detection range of the photodetector on the first quantitative unit axis; and indicating the minimum and maximum intensity values of the detection range of the second photodetector on the second quantitative unit axis (i.e., as described above and herein).

In certain embodiments, the plot of cytometric data is generated and displayed in real time. In some embodiments, the method further includes updating the displayed plot of cytometric data in real time. For example, the displayed plot of cytometric data may be updated to reflect an adjustment of a setting of the photodetector, or to include cytometric data generated for additional particles of the sample.

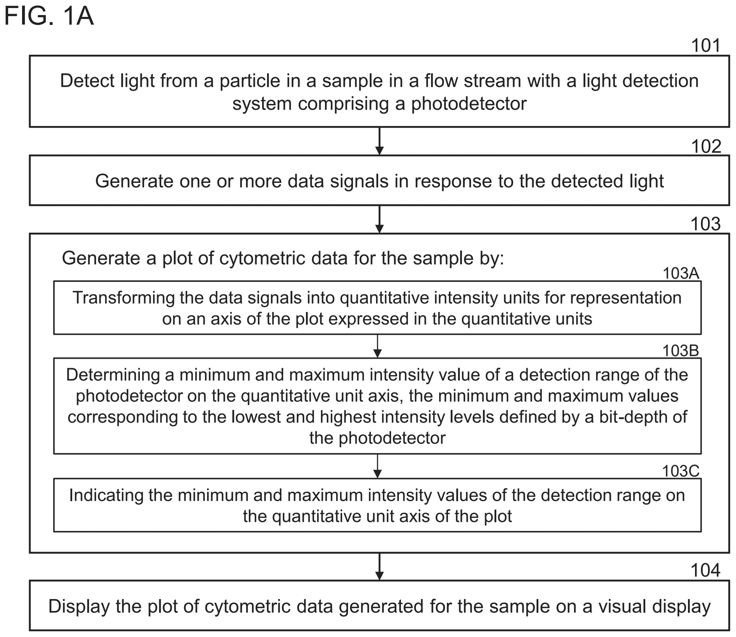

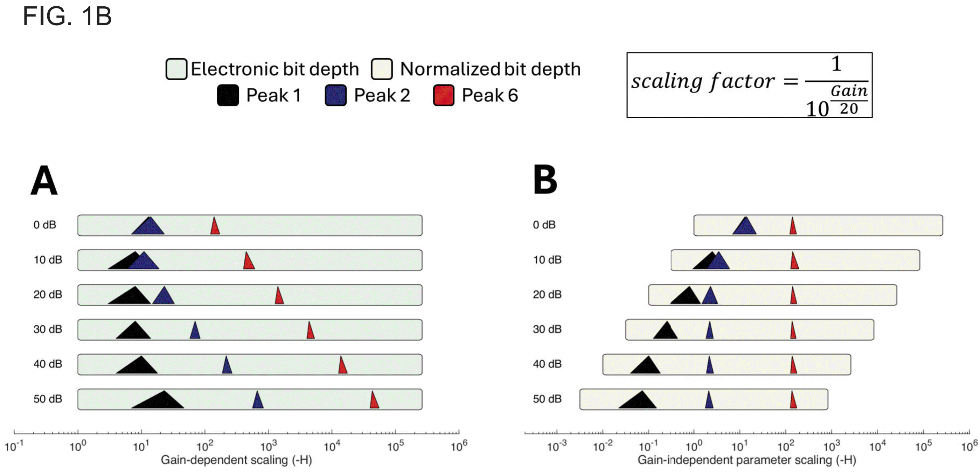

FIG. 1A depicts a flow diagram for practicing methods of visualizing a dynamic range of a light detection system of a flow cytometer (e.g., as described above). In step 101, light is detected from a particle in a sample in a flow stream with a light detection system comprising a photodetector. In step 102, one or more data signals are generated in response to the detected light. The data signals may directly reflect the digital data signals, or intensity levels or channels, output by the ADC of the photodetector. In step 103, a plot of cytometric data is generated for the sample by performing steps 103A-103C. In step 103A, the data signals are transformed into quantitative intensity units for representation on an axis of the plot expressed in the quantitative units. This transformation may be linear or non-linear (e.g., exponential) and may include (e.g., when the data signals directly reflect the intensity levels or channels output by the ADC) selecting the largest data signal corresponding to the sample particle (i.e., pulse height) or summing all the data signals corresponding to the sample particle (i.e., pulse-area). In other instances, the largest data signal is already selected before the transformation, or the data signals are already summed before the transformation (i.e., the transformation converts a summation of the data signals into the quantitative intensity units). In step 103B, a minimum and maximum intensity value of a detection range of the photodetector are determined on the quantitative unit axis, wherein the minimum and maximum values correspond to the lowest and highest intensity levels defined by a bit-depth of the photodetector. In other words, the location of the smallest electric signal output by the photodetector that is quantized by the photodetector's ADC, and the location of the maximum electric signal output by the photodetector that the ADC can accurately digitize without saturation, are both found on the quantitative unit axis of the plot. In some embodiments, this includes using the same transformation on data signals representing the first and last (i.e., highest and lowest) channel of the bit-depth as was used to transform the data signals generated in response to the detected light of the particle (see, e.g., step 103A). In step 103C, the minimum and maximum intensity values of the detection range are indicated on the quantitative unit axis of the plot. In step 104, the plot of cytometric data generated for the sample is displayed on a visual display. In some embodiments, steps 101-104 may be performed again each time light from an additional particle is detected and/or each time a setting (e.g., a gain setting) of the photodetector is adjusted. In this way, the dynamic range of the photodetector is constantly updated on the display-allowing a user to visually determine where particles of a sample fall within the dynamic detection range of the photodetector at any point in time, e.g., during instrument calibration or during an experiment.

FIG. 1B depicts a display of cytometric data indicating a dynamic range of the flow cytometer used to generate the cytometric data. Plot A (left) demonstrates how the relative position of sample populations between the top and the bottom of an arbitrary unit scale (e.g., a gain dependent unit scale) allow a user to visually discern if the sample populations fall within the optimal dynamic detection range of a photodetector. As can be seen in plot A, the bit-depth of the photodetector is inherently tied to the arbitrary unit scale-regardless of detector settings-such that a user can quickly conclude if SNR is effectively optimized for the sample populations based solely on their relative position on the arbitrary unit scale. Plot B (right) demonstrates how the relative position of sample populations between the top and the bottom of a quantitative unit scale (e.g., a gain independent unit scale) does not provide a user with any information as to where the sample populations fall within the dynamic detection range of a photodetector. By shading a region of the plot between the minimum and maximum intensity values along the quantitative unit axis (e.g., in accordance with the methods described above and herein), a user can quickly conclude if SNR is effectively optimized for the sample populations based on their relative position within the visualized dynamic detection range of the photodetector.

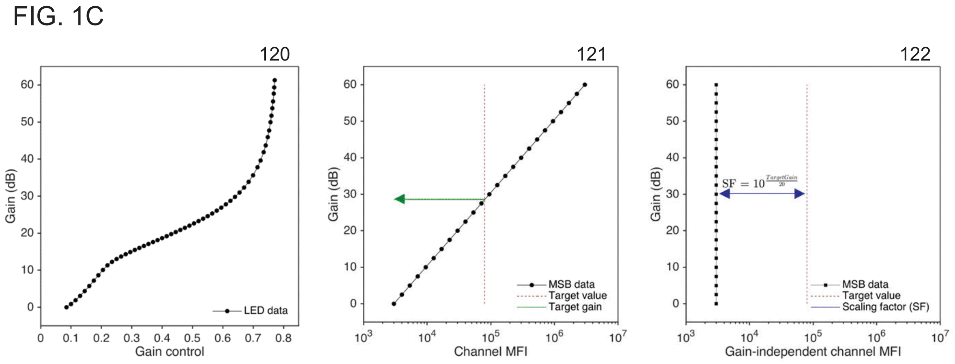

FIG. 1C depicts a step-by-step illustration of generating scaled gain-normalized data according to certain embodiments. In step 120, a lookup table is generated to ensure that changes in mean fluorescence intensity are linear with changes to detector settings (e.g., gain settings). Periodic quality control (e.g., daily) shown at step 121 increases the detector gain settings to make a reference particle's (e.g., multi-spectral bead) mean fluorescence intensity equal to the on-target gain. The on-target gain and on-target MFI are used to calculate a calibration factor that is used to adjust user gains. At step 122, gain-normalized data is generated by dividing data signals by a scaling factor (i.e., the linear gain), resulting in gain-normalized data (shown at step 122 where multi-spectral bead data exhibits the same MFI regardless of detector setting). This scaling factor allows the scaling of MFI to be consistent irrespective of detector setting rather than calculating an offset that is applied for saved settings and updated only after quality control. This can be done independently of detector settings. The periodic gain setting (e.g., daily gain setting) in certain embodiments can be optimized to ensure consistency in sensitivity, resolution or dynamic range. In some instances, the gain setting is left unchanged.

### FLOW CYTOMETRY METHODS

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### FLOW CYTOMETER DEVICES AND SYSTEMS

Aspects of the present disclosure also include flow cytometer devices and systems for practicing the subject methods of visualizing the dynamic range of a light detection system of the flow cytometer, e.g., as described above and herein. Flow cytometers of interest include: a light source configured to irradiate a sample including a particle in a flow stream; a light detection system including a photodetector for detecting light from the irradiated particle; and a processor including memory operably coupled to the processor wherein the memory includes instructions stored thereon, which when executed by the processor, cause the processor to: generate one or more data signals in response to the detected light; generate a plot of cytometric data for the sample, wherein the plot is generated by: transforming the data signals into quantitative intensity units for representation on an axis of the plot expressed in the quantitative units; determining a minimum and maximum intensity value of a detection range of the photodetector on the quantitative unit axis, the minimum and maximum values corresponding to the lowest and highest intensity levels defined by a bit-depth of the photodetector; and indicating the minimum and maximum intensity values of the detection range on the quantitative unit axis of the plot; and display the plot of cytometric data generated for the sample on a visual display. In some embodiments, the flow cytometer further includes a display device operably connected to the processor and configured to display the plot of cytometric data. In some instances, the flow cytometer further includes an operator input device operably connected to the processor and configured to receive an adjustment of a setting of the photodetector from a user.

In some embodiments, the flow cytometer includes a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1): 17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633; the disclosures of which are herein incorporated by reference in their entirety.

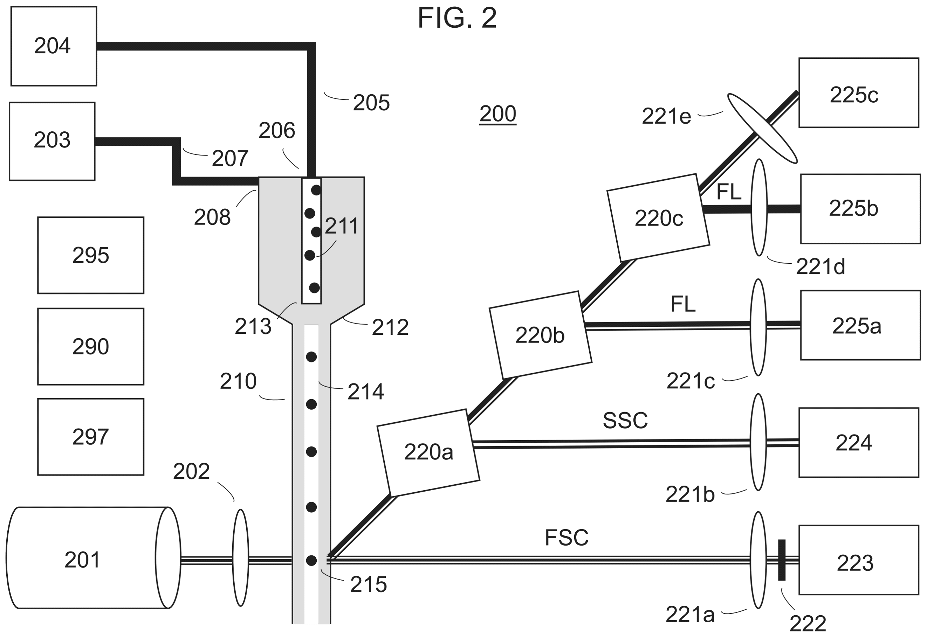

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2**, flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

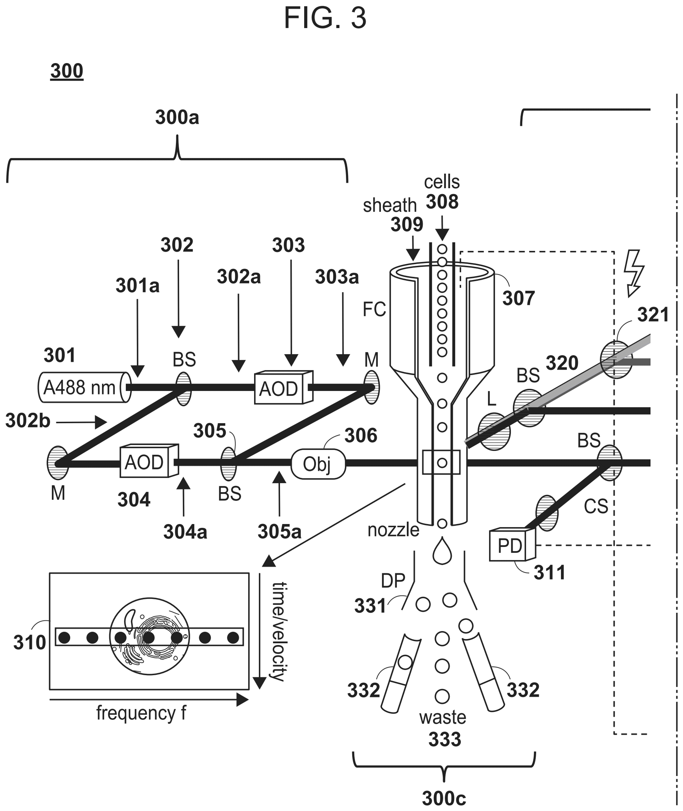

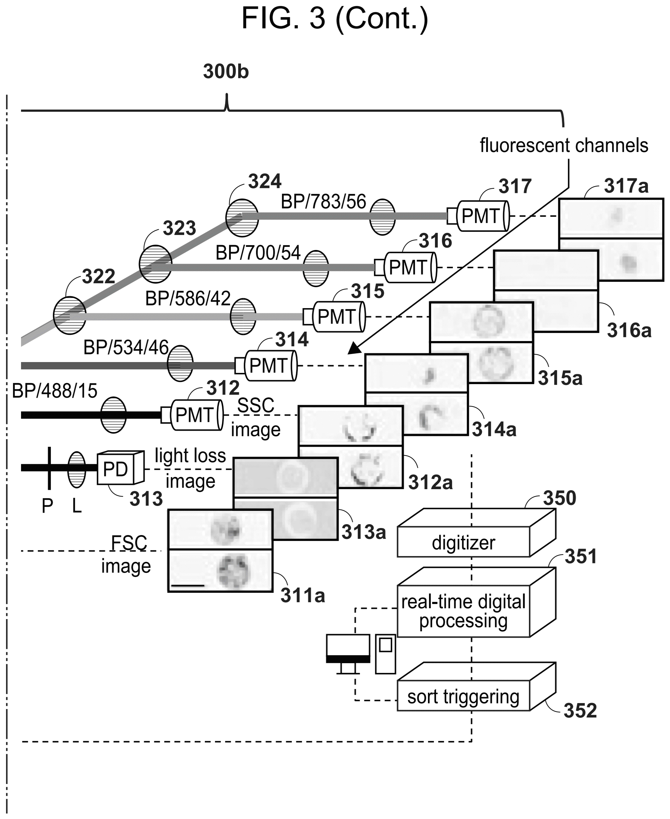

In certain embodiments, systems are a fluorescence imaging using radiofrequency tagged emission image-enabled particle sorter, such as depicted in **FIG. 3**. Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

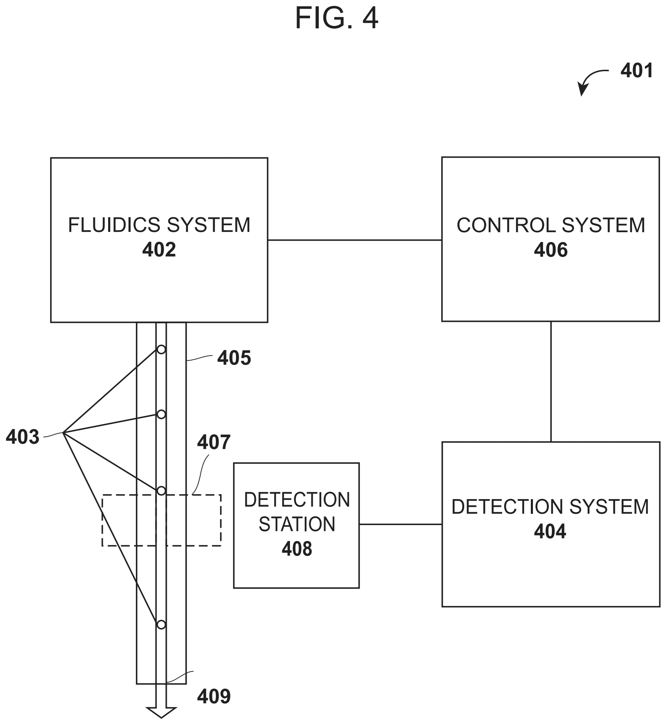

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

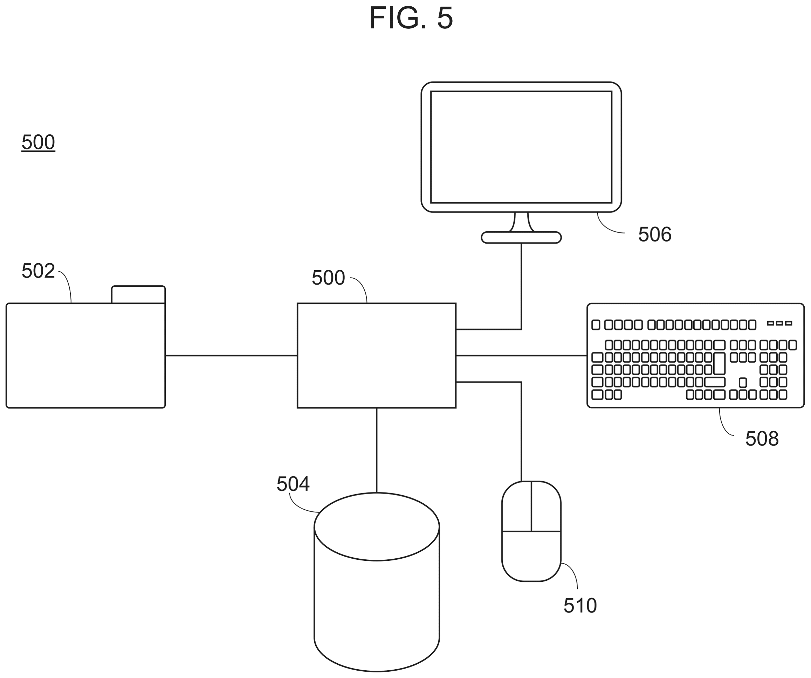

**FIG.** 5 shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in** **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

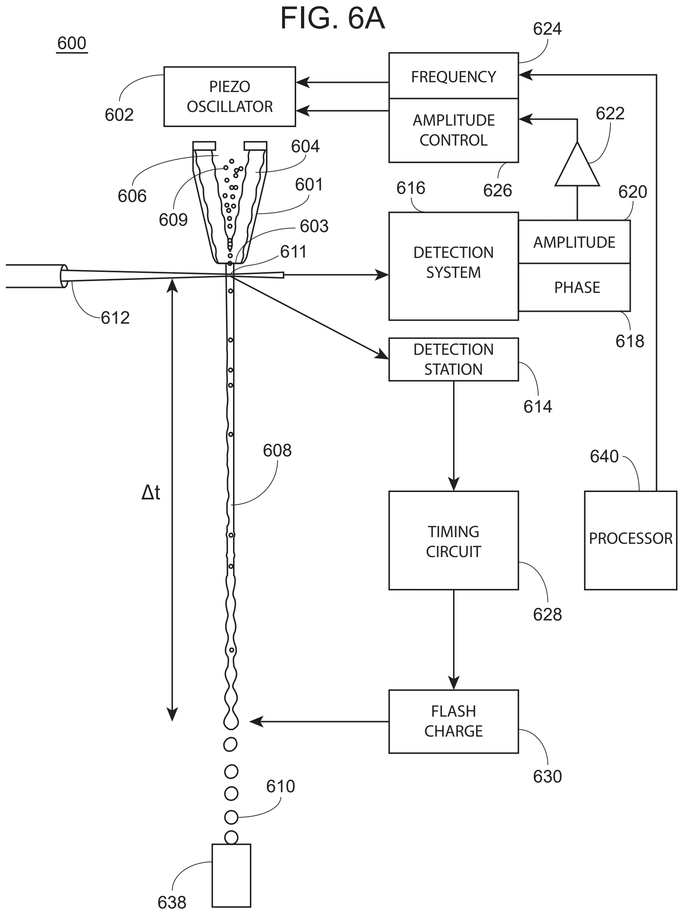

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

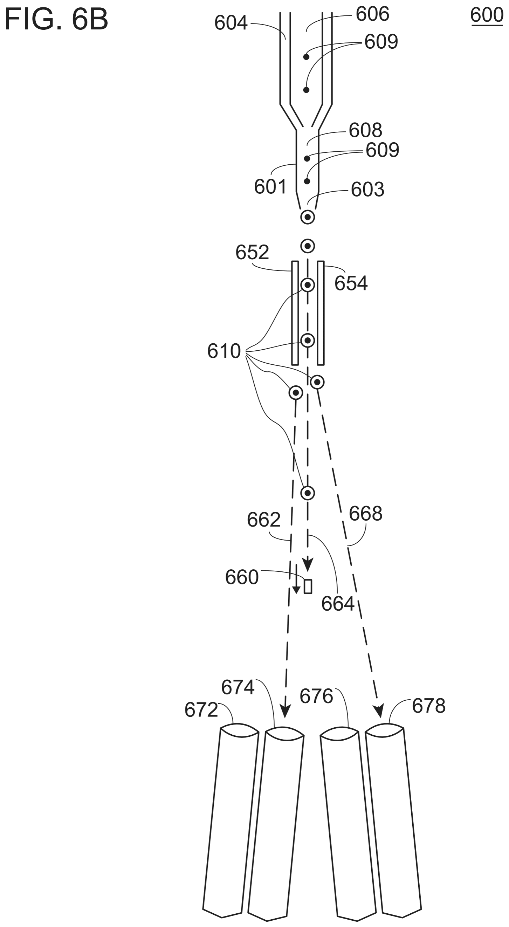

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

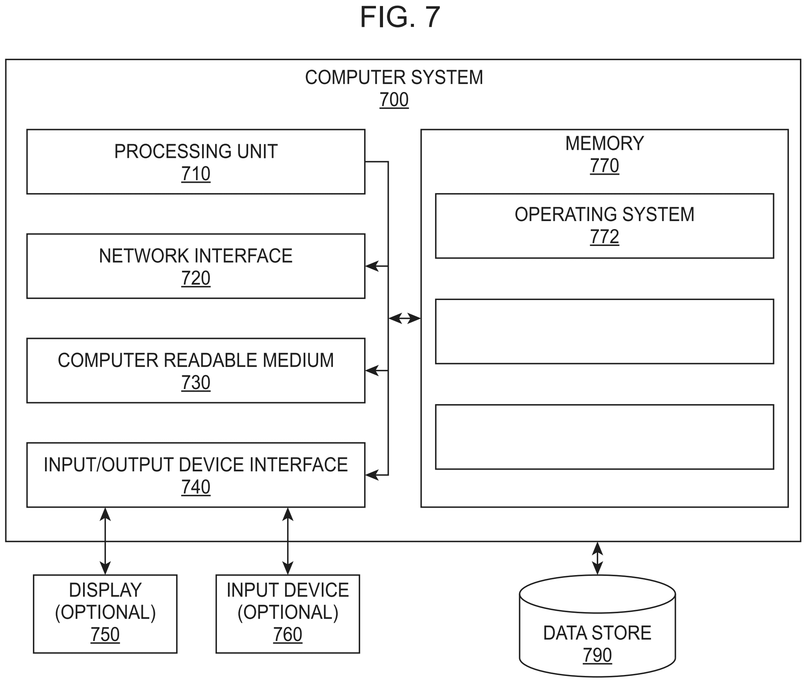

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for (e.g., automatically) visualizing a dynamic range of a light detection system of a flow cytometer (e.g., as described above and herein). In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject methods, systems and computer systems find use in a variety of applications where it is desirable to calibrate or optimize a light detection system, e.g., of a flow cytometer. For example, the present disclosure finds use in facilitating the calibration of flow cytometers, optimizing the SNR of photodetectors, and enabling the continuous visual monitoring of the quality of the data obtained from flow cytometers. In some embodiments, the subject methods, systems, and computer systems of the disclosure allow a user to quickly and easily ascertain if the sample population(s) of an experiment are within the optimal dynamic detection range of a detector. In turn, the disclosure allows for the effective and continuous enhancement of detector sensitivity and population resolution-while ensuring the overall accuracy and reproducibility of experimental results.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

Notwithstanding the appended claims, the disclosure is also defined by the following clauses:
1. A flow cytometer comprising:
   a light source configured to irradiate a sample comprising a particle in a flow stream;
   a light detection system comprising a photodetector for detecting light from the irradiated particle; and
   a processor comprising memory operably coupled to the processor wherein the memory comprises instructions stored thereon, which when executed by the processor, cause the processor to:
      generate one or more data signals in response to the detected light;
      generate a plot of cytometric data for the sample, wherein the plot is generated by:
         transforming the data signals into quantitative intensity units for representation on an axis of the plot expressed in the quantitative units;
         determining a minimum and maximum intensity value of a detection range of the photodetector on the quantitative unit axis, the minimum and maximum values corresponding to the lowest and highest intensity levels defined by a bit-depth of the photodetector; and
         indicating the minimum and maximum intensity values of the detection range on the quantitative unit axis of the plot; and
      display the plot of cytometric data generated for the sample on a visual display.
2. The flow cytometer according to Clause 1, wherein the flow cytometer further comprises a display device operably connected to the processor and configured to display the plot of cytometric data.
3. The flow cytometer according to Clause 1 or 2, wherein the quantitative intensity units are independent of photodetector settings.
4. The flow cytometer according to any one of Clauses 1-3, wherein the one or more data signals correspond to a pulse height of the particle.
5. The flow cytometer according to any one of Clauses 1-3, wherein the one or more data signals correspond to a pulse-area of the particle.
6. The flow cytometer according to Clause 5, wherein the minimum and maximum intensity values of the detection range are determined using a pulse-area to height ratio.
7. The flow cytometer according to Clause 6, wherein the memory comprises instructions for calculating the pulse-area to height ratio by:
   generating data signals from light detected from an irradiated reference particle;
   determining a pulse-area from the generated data signals;
   determining a pulse height from the generated data signals; and
   calculating the pulse-area to height ratio by dividing the pulse-area by the pulse height.
8. The flow cytometer according to Clause 7, wherein the reference particle comprises a multi-spectral fluorescence bead.
9. The flow cytometer according to any one of Clauses 1-8, wherein the one or more data signals of the sample particle are transformed into quantitative intensity units using a scaling factor, wherein the scaling factor comprises a detector gain of the photodetector.
10. The flow cytometer according to Clause 9, wherein the minimum and maximum intensity values of the detection range are determined using the scaling factor.
11. The flow cytometer according to Clause 10, wherein the scaling factor comprises a calibration factor, and the one or more data signals are transformed into the quantitative intensity units by:
   normalizing the data signals with the detector gain to generate gain-normalized data signals; and
   adjusting the gain-normalized data signals with the calibration factor to generate calibrated data signals.
12. The flow cytometer according to Clause 11, wherein the memory comprises instructions for calculating the calibration factor by adjusting gain-normalized data signals generated from light detected from an irradiated reference particle to a predetermined mean fluorescence intensity (MFI).
13. The flow cytometer according to Clause 12, wherein the memory comprises instructions for calculating the calibration factor by:
   determining linear gain as a function of photodetector voltage;
   determining the gain corresponding to the predetermined MFI for data signals generated from light detected from the irradiated reference particle; and
   calculating the calibration factor which adjusts the generated gain-normalized reference data signals to the predetermined MFI.
14. The flow cytometer according to Clause 13, wherein the linear gain is derived from a look-up table and the reference particle comprises a multi-spectral fluorescence bead.
15. The flow cytometer according to Clauses 13 or 14, wherein the memory comprises instructions for determining the linear gain as a function of photodetector voltage by:
   irradiating the photodetector with a light source at a plurality of different intensities;
   detecting light from the light source at the plurality of different intensities at a plurality of different photodetector voltages; and
   determining detector gain settings for the photodetector sufficient to generate an MFI that increases linearly with the detector gain.
16. The flow cytometer according to any one of Clauses 9-15, wherein the memory comprises instructions for adjusting a setting of the photodetector.
17. The flow cytometer according to Clause 16, wherein the memory comprises instructions for adjusting the setting of the photodetector by:
   receiving an adjustment for the photodetector, wherein the adjustment comprises a change in the gain of the photodetector to an adjusted gain;
   adjusting the gain of the photodetector to the adjusted gain; and
   rescaling the minimum and maximum intensity values of the detection range using the change in the gain of the photodetector.
18. The flow cytometer according to Clause 17, wherein the flow cytometer further comprises an operator input device operably connected to the processor and configured to receive the adjustment from a user.
19. The flow cytometer according to Clause 17 or 18, wherein the setting of the photodetector is adjusted in order to maximize a signal-to-noise ratio (SNR) for the sample.
20. The flow cytometer according to any one of Clauses 17-19, wherein the memory comprises instructions for including cytometric data generated for particles of the sample after adjusting the setting of the photodetector on the plot by:
   generating data signals in response to light detected from irradiated particles of the sample after adjusting the setting of the photodetector;
   transforming the data signals into the quantitative intensity units using the change in the gain of the photodetector; and
   plotting the transformed data signals on the plot.
21. The flow cytometer according to any one of Clauses 1-20, wherein the minimum and maximum intensity values of the detection range are indicated by visual indicators marking the quantitative unit axis of the plot at the minimum and maximum intensity values.
22. The flow cytometer according to Clause 21, wherein the visual indicators include a first visual indicator comprising a line perpendicular to the quantitative unit axis at the minimum intensity value, and a second visual indicator comprising a line perpendicular to the quantitative unit axis at the maximum intensity value.
23. The flow cytometer according to any one of Clauses 1-22, wherein the minimum and maximum intensity values of the detection range are indicated by shading a region of the plot between the minimum and maximum intensity values along the quantitative unit axis.
24. The flow cytometer according to any one of Clauses 1-23, wherein the minimum and maximum intensity values of the detection range are indicated by shading a region of the plot corresponding to values below the minimum intensity value and above the maximum intensity value along the quantitative unit axis.
25. The flow cytometer according to any one of Clauses 1-24, wherein the plot is a histogram representing fluorescence intensity values in quantitative intensity units on a first axis and corresponding particle counts on a second axis.
26. The flow cytometer according to any one of Clauses 1-24, wherein the plot is a dot plot comprising:
   a first axis representing fluorescence intensity values, in quantitative intensity units, obtained using data signals generated from light detected by the photodetector; and
   a second axis representing fluorescence intensity values obtained using data signals generated from light detected by a second photodetector.
27. The flow cytometer according to any one of Clauses 1-26, wherein the flow cytometer is configured to generate and display the plot of cytometric data in real time.
28. The flow cytometer according to Clause 27, wherein the flow cytometer is configured to update the displayed plot of cytometric data in real time.
29. The flow cytometer according to Clause 28, wherein the plot of cytometric data is updated to reflect an adjustment of a setting of the photodetector, or to include cytometric data generated for additional particles of the sample.
30. The flow cytometer according to any one of Clauses 1-29, wherein the light source comprises a laser.
31. The flow cytometer according to Clause 30, wherein the light source comprises a plurality of lasers.
32. The flow cytometer according to any one of Clauses 1-31, wherein the photodetector comprises a photomultiplier tube.
33. A method of displaying cytometric data for a user, the method comprising:
   detecting light from a particle in a sample in a flow stream with a light detection system comprising a photodetector;
   generating one or more data signals in response to the detected light;
   generating a plot of cytometric data for the sample, wherein the plot is generated by:
      transforming the data signals into quantitative intensity units for representation on an axis of the plot expressed in the quantitative units;
      determining a minimum and maximum intensity value of a detection range of the photodetector on the quantitative unit axis, the minimum and maximum values corresponding to the lowest and highest intensity levels defined by a bit-depth of the photodetector; and
      indicating the minimum and maximum intensity values of the detection range on the quantitative unit axis of the plot; and
   displaying the plot of cytometric data generated for the sample on a visual display.
34. The method according to Clause 33, wherein the quantitative intensity units are independent of photodetector settings.
35. The method according to any one of Clauses 33-34, wherein the one or more data signals correspond to a pulse height of the particle.
36. The method according to any one of Clauses 33-35, wherein the one or more data signals correspond to a pulse-area of the particle.
37. The method according to Clause 36, wherein the minimum and maximum intensity values of the detection range are determined using the pulse-area to height ratio.
38. The method according to Clause 37, wherein the method further comprises calculating the pulse-area to height ratio by:
   generating data signals from light detected from an irradiated reference particle;
   determining a pulse-area from the generated data signals;
   determining a pulse height from the generated data signals; and
   calculating the pulse-area to height ratio by dividing the pulse-area by the pulse height.
39. The method according to Clause 38, wherein the reference particle comprises a multi-spectral fluorescence bead.
40. The method according to any one of Clauses 33-39, wherein the one or more data signals of the sample particle are transformed into quantitative intensity units using a scaling factor, wherein the scaling factor comprises a detector gain of the photodetector.
41. The method according to Clause 40, wherein the minimum and maximum intensity values of the detection range are determined using the scaling factor.
42. The method according to Clause 41, wherein the scaling factor comprises a calibration factor, and the one or more data signals are transformed into the quantitative intensity units by:
   normalizing the data signals with the detector gain to generate gain-normalized data signals; and
   adjusting the gain-normalized data signals with the calibration factor to generate calibrated data signals.
43. The method according to Clause 42, wherein the method further comprises calculating the calibration factor by adjusting gain-normalized data signals generated from light detected from an irradiated reference particle to a predetermined MFI.
44. The method according to Clause 43, wherein the method further comprises calculating the calibration factor by:
   determining linear gain as a function of photodetector voltage;
   determining the gain corresponding to the predetermined MFI for data signals generated from light detected from the irradiated reference particle; and
   calculating the calibration factor which adjusts the generated gain-normalized reference data signals to the predetermined MFI.
45. The method according to Clause 44, wherein the linear gain is derived from a look-up table and the reference particle comprises a multi-spectral fluorescence bead.
46. The method according to Clauses 44 or 45, wherein the method further comprises determining the linear gain as a function of photodetector voltage by:
   irradiating the photodetector with a light source at a plurality of different intensities;
   detecting light from the light source at the plurality of different intensities at a plurality of different photodetector voltages; and
   determining detector gain settings for the photodetector sufficient to generate an MFI that increases linearly with the detector gain.
47. The method according to any one of Clauses 40-46, wherein the method further comprises adjusting a setting of the photodetector.
48. The method according to Clause 47, wherein the photodetector setting is adjusted by:
   receiving an adjustment for the photodetector, wherein the adjustment comprises a change in the gain of the photodetector to an adjusted gain;
   adjusting the gain of the photodetector in order to reach the adjusted gain; and
   rescaling the minimum and maximum intensity values of the detection range using the change in the gain of the photodetector.
49. The method according to Clause 48, wherein the adjustment is received from a user.
50. The method according to Clause 48 or 49, wherein the setting of the photodetector is adjusted in order to maximize a signal-to-noise ratio (SNR) for the sample.
51. The method according to any one of Clauses 48-50, wherein the method further comprises including cytometric data generated for particles of the sample after adjusting the setting of the photodetector on the plot by:
   generating data signals in response to light detected from irradiated particles of the sample after adjusting the setting of the photodetector;
   transforming the data signals into the quantitative intensity units using the change in the gain of the photodetector; and
   plotting the transformed data signals on the plot.
52. The method according to any one of Clauses 33-51, wherein the minimum and maximum intensity values of the detection range are indicated by visual indicators marking the quantitative unit axis of the plot at the minimum and maximum intensity values.
53. The method according to Clause 52, wherein the visual indicators include a first visual indicator comprising a line perpendicular to the quantitative unit axis at the minimum intensity value, and a second visual indicator comprising a line perpendicular to the quantitative unit axis at the maximum intensity value.
54. The method according to any one of Clauses 33-53, wherein the minimum and maximum intensity values of the detection range are indicated by shading a region of the plot between the minimum and maximum intensity values along the quantitative unit axis.
55. The method according to any one of Clauses 33-54, wherein the minimum and maximum intensity values of the detection range are indicated by shading a region of the plot corresponding to values below the minimum intensity value and above the maximum intensity value along the quantitative unit axis.
56. The method according to any one of Clauses 33-55, wherein the plot is a histogram representing fluorescence intensity values in quantitative intensity units on a first axis and corresponding particle counts on a second axis.
57. The method according to any one of Clauses 33-55, wherein the plot is a dot plot comprising:
   a first axis representing fluorescence intensity values, in quantitative intensity units, obtained using data signals generated from light detected by the photodetector; and
   a second axis representing fluorescence intensity values obtained using data signals generated from light detected by a second photodetector.
58. The method according to any one of Clauses 33-57, wherein the plot of cytometric data is generated and displayed in real time.
59. The method according to Clause 58, wherein the method further comprises updating the displayed plot of cytometric data in real time.
60. The method according to Clause 59, wherein the displayed plot of cytometric data is updated to reflect an adjustment of a setting of the photodetector, or to include cytometric data generated for additional particles of the sample.
61. The method according to any one of Clauses 33-60, wherein the light source comprises a laser.
62. The method according to Clause 61, wherein the light source comprises a plurality of lasers.
63. The method according to any one of Clauses 33-62, wherein the photodetector comprises a photomultiplier tube.
64. A system for displaying cytometric data for a user, the system comprising:
   a processor comprising memory operably coupled to the processor wherein the memory comprises instructions stored thereon, which when executed by the processor, cause the processor to:
   receive cytometric data for a sample in a flow stream comprising one or more data signals generated by a photodetector in response to detecting light from a particle in the sample;
   generate a plot of the cytometric data, wherein the plot is generated by:
      transforming the data signals into quantitative intensity units for representation on an axis of the plot expressed in the quantitative units;
      determining a minimum and maximum intensity value of a detection range of the photodetector on the quantitative unit axis, the minimum and maximum values corresponding to the lowest and highest intensity levels defined by a bit-depth of the photodetector; and
      indicating the minimum and maximum intensity values of the detection range on the quantitative unit axis of the plot; and
   display the plot of cytometric data generated for the sample on a visual display.
65. The system according to Clause 64, wherein the system further comprises a display device operably connected to the processor and configured to display the plot of cytometric data.
66. The system according to Clause 64 or 65, wherein the quantitative intensity units are independent of photodetector settings.
67. The system according to any one of Clauses 64-66, wherein the one or more data signals correspond to a pulse height of the particle.
68. The system according to any one of Clauses 64-67, wherein the one or more data signals correspond to a pulse-area of the particle.
69. The system according to Clause 68, wherein the minimum and maximum intensity values of the detection range are determined using a pulse-area to height ratio.
70. The system according to Clause 69, wherein the memory comprises instructions for calculating the pulse-area to height ratio by:
   generating data signals from light detected from an irradiated reference particle;
   determining a pulse-area from the generated data signals;
   determining a pulse height from the generated data signals; and
   calculating the pulse-area to height ratio by dividing the pulse-area by the pulse height.
71. The system according to Clause 70, wherein the reference particle comprises a multi-spectral fluorescence bead.
72. The system according to any one of Clauses 64-71, wherein the one or more data signals of the sample particle are transformed into quantitative intensity units using a scaling factor, wherein the scaling factor comprises a detector gain of the photodetector.
73. The system according to Clause 72, wherein the minimum and maximum intensity values of the detection range are determined using the scaling factor.
74. The system according to Clause 73, wherein the scaling factor comprises a calibration factor, and the one or more data signals are transformed into the quantitative intensity units by:
   normalizing the data signals with the detector gain to generate gain-normalized data signals; and
   adjusting the gain-normalized data signals with the calibration factor to generate calibrated data signals.
75. The system according to Clause 74, wherein the memory comprises instructions for calculating the calibration factor by adjusting gain-normalized data signals generated from light detected from an irradiated reference particle to a predetermined MFI.
76. The system according to Clause 75, wherein the memory comprises instructions for calculating the calibration factor by:
   determining linear gain as a function of photodetector voltage;
   determining the gain corresponding to the predetermined MFI for data signals generated from light detected from the irradiated reference particle; and
   calculating the calibration factor which adjusts the generated gain-normalized reference data signals to the predetermined MFI.
77. The system according to Clause 76, wherein the linear gain is derived from a look-up table and the reference particle comprises a multi-spectral fluorescence bead.
78. The system according to Clauses 76 or 77, wherein the memory comprises instructions for determining the linear gain as a function of photodetector voltage by:
   irradiating the photodetector with a light source at a plurality of different intensities;
   detecting light from the light source at the plurality of different intensities at a plurality of different photodetector voltages; and
   determining detector gain settings for the photodetector sufficient to generate an MFI that increases linearly with the detector gain.
79. The system according to any one of Clauses 72-78, wherein the memory comprises instructions for adjusting a setting of the photodetector.
80. The system according to Clause 79, wherein the memory comprises instructions for adjusting the setting of the photodetector by:
   receiving an adjustment for the photodetector, wherein the adjustment comprises a change in the gain of the photodetector to an adjusted gain;
   adjusting the gain of the photodetector to the adjusted gain; and
   rescaling the minimum and maximum intensity values of the detection range using the change in the gain of the photodetector.
81. The system according to Clause 80, wherein the system further comprises an operator input device operably connected to the processor and configured to receive the adjustment from a user.
82. The system according to Clause 80 or 81, wherein the setting of the photodetector is adjusted in order to maximize a signal-to-noise ratio (SNR) for the sample.
83. The system according to any one of Clauses 80-82, wherein the memory comprises instructions for including cytometric data generated for particles of the sample after adjusting the setting of the photodetector on the plot by:
   generating data signals in response to light detected from irradiated particles of the sample after adjusting the setting of the photodetector;
   transforming the data signals into the quantitative intensity units using the change in the gain of the photodetector; and
   plotting the transformed data signals on the plot.
84. The system according to any one of Clauses 64-83, wherein the minimum and maximum intensity values of the detection range are indicated by visual indicators marking the quantitative unit axis of the plot at the minimum and maximum intensity values.
85. The system according to Clause 84, wherein the visual indicators include a first visual indicator comprising a line perpendicular to the quantitative unit axis at the minimum intensity value, and a second visual indicator comprising a line perpendicular to the quantitative unit axis at the maximum intensity value.
86. The system according to any one of Clauses 64-85, wherein the minimum and maximum intensity values of the detection range are indicated by shading a region of the plot between the minimum and maximum intensity values along the quantitative unit axis.
87. The system according to any one of Clauses 64-86, wherein the minimum and maximum intensity values of the detection range are indicated by shading a region of the plot corresponding to values below the minimum intensity value and above the maximum intensity value along the quantitative unit axis.
88. The system according to any one of Clauses 64-87, wherein the plot is a histogram representing fluorescence intensity values in quantitative intensity units on a first axis and corresponding particle counts on a second axis.
89. The system according to any one of Clauses 64-87, wherein the plot is a dot plot comprising:
   a first axis representing fluorescence intensity values, in quantitative intensity units, obtained using data signals generated from light detected by the photodetector; and
   a second axis representing fluorescence intensity values obtained using data signals generated from light detected by a second photodetector.
90. The system according to any one of Clauses 64-89, wherein the system is configured to generate and display the plot of cytometric data in real time.
91. The system according to Clause 90, wherein the system is configured to update the displayed plot of cytometric data in real time.
92. The system according to Clause 91, wherein the plot of cytometric data is updated to reflect an adjustment of a setting of the photodetector, or to include cytometric data generated for additional particles of the sample.
93. The system according to any one of Clauses 64-92, wherein the light source comprises a laser.
94. The system according to Clause 93, wherein the light source comprises a plurality of lasers.
95. The system according to any one of Clauses 64-94, wherein the photodetector comprises a photomultiplier tube.
96. A non-transitory computer readable storage medium comprising instructions stored thereon for displaying cytometric data for a user by a method comprising:
   detecting light from a particle in a sample in a flow stream with a light detection system comprising a photodetector;
   generating one or more data signals in response to the detected light;
   generating a plot of cytometric data for the sample, wherein the plot is generated by:
      transforming the data signals into quantitative intensity units for representation on an axis of the plot expressed in the quantitative units;
      determining a minimum and maximum intensity value of a detection range of the photodetector on the quantitative unit axis, the minimum and maximum values corresponding to the lowest and highest intensity levels defined by a bit-depth of the photodetector; and
      indicating the minimum and maximum intensity values of the detection range on the quantitative unit axis of the plot; and
   displaying the plot of cytometric data generated for the sample on a visual display.
97. The non-transitory computer readable storage medium according to Clause 96, wherein the quantitative intensity units are independent of photodetector settings.
98. The non-transitory computer readable storage medium according to any one of Clauses 96-97, wherein the one or more data signals correspond to a pulse height of the particle.
99. The non-transitory computer readable storage medium according to any one of Clauses 96-98, wherein the one or more data signals correspond to a pulse-area of the particle.
100. The non-transitory computer readable storage medium according to Clause 99, wherein the minimum and maximum intensity values of the detection range are determined using the pulse-area to height ratio.
101. The non-transitory computer readable storage medium according to Clause 100, wherein the method further comprises calculating the pulse-area to height ratio by:
   generating data signals from light detected from an irradiated reference particle;
   determining a pulse-area from the generated data signals;
   determining a pulse height from the generated data signals; and
   calculating the pulse-area to height ratio by dividing the pulse-area by the pulse height.
102. The non-transitory computer readable storage medium according to Clause 101, wherein the reference particle comprises a multi-spectral fluorescence bead.
103. The non-transitory computer readable storage medium according to any one of Clauses 96-102, wherein the one or more data signals of the sample particle are transformed into quantitative intensity units using a scaling factor, wherein the scaling factor comprises a detector gain of the photodetector.
104. The non-transitory computer readable storage medium according to Clause 103, wherein the minimum and maximum intensity values of the detection range are determined using the scaling factor.
105. The non-transitory computer readable storage medium according to Clause 104, wherein the scaling factor comprises a calibration factor, and the one or more data signals are transformed into the quantitative intensity units by:
   normalizing the data signals with the detector gain to generate gain-normalized data signals; and
   adjusting the gain-normalized data signals with the calibration factor to generate calibrated data signals.
106. The non-transitory computer readable storage medium according to Clause 105, wherein the method further comprises calculating the calibration factor by adjusting gain-normalized data signals generated from light detected from an irradiated reference particle to a predetermined MFI.
107. The non-transitory computer readable storage medium according to Clause 106, wherein the method further comprises calculating the calibration factor by:
   determining linear gain as a function of photodetector voltage;
   determining the gain corresponding to the predetermined MFI for data signals generated from light detected from the irradiated reference particle; and
   calculating the calibration factor which adjusts the generated gain-normalized reference data signals to the predetermined MFI.
108. The non-transitory computer readable storage medium according to Clause 107, wherein the linear gain is derived from a look-up table and the reference particle comprises a multi-spectral fluorescence bead.
109. The non-transitory computer readable storage medium according to Clauses 107 or 108, wherein the method further comprises determining the linear gain as a function of photodetector voltage by:
   irradiating the photodetector with a light source at a plurality of different intensities;
   detecting light from the light source at the plurality of different intensities at a plurality of different photodetector voltages; and
   determining detector gain settings for the photodetector sufficient to generate an MFI that increases linearly with the detector gain.
110. The non-transitory computer readable storage medium according to any one of Clauses 103-109, wherein the method further comprises adjusting a setting of the photodetector.
111. The non-transitory computer readable storage medium according to Clause 110, wherein the photodetector setting is adjusted by:
   receiving an adjustment for the photodetector, wherein the adjustment comprises a change in the gain of the photodetector to an adjusted gain;
   adjusting the gain of the photodetector in order to reach the adjusted gain; and
   rescaling the minimum and maximum intensity values of the detection range using the change in the gain of the photodetector.
112. The non-transitory computer readable storage medium according to Clause 111, wherein the adjustment is received from a user.
113. The non-transitory computer readable storage medium according to Clause 111 or 112, wherein the setting of the photodetector is adjusted in order to maximize a signal-to-noise ratio (SNR) for the sample.
114. The non-transitory computer readable storage medium according to any one of Clauses 111-113, wherein the method further comprises including cytometric data generated for particles of the sample after adjusting the setting of the photodetector on the plot by:
   generating data signals in response to light detected from irradiated particles of the sample after adjusting the setting of the photodetector;
   transforming the data signals into the quantitative intensity units using the change in the gain of the photodetector; and
   plotting the transformed data signals on the plot.
115. The non-transitory computer readable storage medium according to any one of Clauses 96-114, wherein the minimum and maximum intensity values of the detection range are indicated by visual indicators marking the quantitative unit axis of the plot at the minimum and maximum intensity values.
116. The non-transitory computer readable storage medium according to Clause 115, wherein the visual indicators include a first visual indicator comprising a line perpendicular to the quantitative unit axis at the minimum intensity value, and a second visual indicator comprising a line perpendicular to the quantitative unit axis at the maximum intensity value.
117. The non-transitory computer readable storage medium according to any one of Clauses 96-116, wherein the minimum and maximum intensity values of the detection range are indicated by shading a region of the plot between the minimum and maximum intensity values along the quantitative unit axis.
118. The non-transitory computer readable storage medium according to any one of Clauses 96-117, wherein the minimum and maximum intensity values of the detection range are indicated by shading a region of the plot corresponding to values below the minimum intensity value and above the maximum intensity value along the quantitative unit axis.
119. The non-transitory computer readable storage medium according to any one of Clauses 96-118, wherein the plot is a histogram representing fluorescence intensity values in quantitative intensity units on a first axis and corresponding particle counts on a second axis.
120. The non-transitory computer readable storage medium according to any one of Clauses 96-118, wherein the plot is a dot plot comprising:
   a first axis representing fluorescence intensity values, in quantitative intensity units, obtained using data signals generated from light detected by the photodetector; and
   a second axis representing fluorescence intensity values obtained using data signals generated from light detected by a second photodetector.
121. The non-transitory computer readable storage medium according to any one of Clauses 96-120, wherein the plot of cytometric data is generated and displayed in real time.
122. The non-transitory computer readable storage medium according to Clause 121, wherein the method further comprises updating the displayed plot of cytometric data in real time.
123. The non-transitory computer readable storage medium according to Clause 122, wherein the displayed plot of cytometric data is updated to reflect an adjustment of a setting of the photodetector, or to include cytometric data generated for additional particles of the sample.
124. The non-transitory computer readable storage medium according to any one of Clauses 96-123, wherein the light source comprises a laser.
125. The non-transitory computer readable storage medium according to Clause 124, wherein the light source comprises a plurality of lasers.
126. The non-transitory computer readable storage medium according to any one of Clauses 96-125, wherein the photodetector comprises a photomultiplier tube.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A flow cytometer comprising:
a light source configured to irradiate a sample comprising a particle in a flow stream;
a light detection system comprising a photodetector for detecting light from the irradiated particle; and
a processor comprising memory operably coupled to the processor wherein the memory comprises instructions stored thereon, which when executed by the processor, cause the processor to:
generate one or more data signals in response to the detected light;
generate a plot of cytometric data for the sample, wherein the plot is generated by:
transforming the data signals into quantitative intensity units for representation on an axis of the plot expressed in the quantitative units;
determining a minimum and maximum intensity value of a detection range of the photodetector on the quantitative unit axis, the minimum and maximum values corresponding to the lowest and highest intensity levels defined by a bit-depth of the photodetector; and
indicating the minimum and maximum intensity values of the detection range on the quantitative unit axis of the plot; and
display the plot of cytometric data generated for the sample on a visual display.

2. The flow cytometer according to Claim 1, wherein the flow cytometer further comprises a display device operably connected to the processor and configured to display the plot of cytometric data.

3. The flow cytometer according to Claim 1 or 2, wherein the quantitative intensity units are independent of photodetector settings.

4. The flow cytometer according to any one of Claims 1-3, wherein the one or more data signals correspond to a pulse height of the particle.

5. The flow cytometer according to any one of Claims 1-3, wherein the one or more data signals correspond to a pulse-area of the particle.

6. The flow cytometer according to any one of Claims 1-5, wherein the one or more data signals of the sample particle are transformed into quantitative intensity units using a scaling factor, wherein the scaling factor comprises a detector gain of the photodetector.

7. The flow cytometer according to any one of Claims 1-6, wherein the minimum and maximum intensity values of the detection range are indicated by visual indicators marking the quantitative unit axis of the plot at the minimum and maximum intensity values.

8. The flow cytometer according to any one of Claims 1-7, wherein the minimum and maximum intensity values of the detection range are indicated by shading a region of the plot between the minimum and maximum intensity values along the quantitative unit axis.

9. The flow cytometer according to any one of Claims 1-8, wherein the minimum and maximum intensity values of the detection range are indicated by shading a region of the plot corresponding to values below the minimum intensity value and above the maximum intensity value along the quantitative unit axis.

10. The flow cytometer according to any one of Claims 1-9, wherein the plot is a histogram representing fluorescence intensity values in quantitative intensity units on a first axis and corresponding particle counts on a second axis.

11. The flow cytometer according to any one of Claims 1-10, wherein the plot is a dot plot comprising:
a first axis representing fluorescence intensity values, in quantitative intensity units, obtained using data signals generated from light detected by the photodetector; and
a second axis representing fluorescence intensity values obtained using data signals generated from light detected by a second photodetector.

12. The flow cytometer according to any one of Claims 1-11, wherein the flow cytometer is configured to generate and display the plot of cytometric data in real time.

13. A method of displaying cytometric data for a user, the method comprising:
detecting light from a particle in a sample in a flow stream with a light detection system comprising a photodetector;
generating one or more data signals in response to the detected light;
generating a plot of cytometric data for the sample, wherein the plot is generated by:
transforming the data signals into quantitative intensity units for representation on an axis of the plot expressed in the quantitative units;
determining a minimum and maximum intensity value of a detection range of the photodetector on the quantitative unit axis, the minimum and maximum values corresponding to the lowest and highest intensity levels defined by a bit-depth of the photodetector; and
indicating the minimum and maximum intensity values of the detection range on the quantitative unit axis of the plot; and
displaying the plot of cytometric data generated for the sample on a visual display.

14. The method according to Claim 13, wherein the quantitative intensity units are independent of photodetector settings.

15. A system for displaying cytometric data for a user, the system comprising:
a processor comprising memory operably coupled to the processor wherein the memory comprises instructions stored thereon, which when executed by the processor, cause the processor to:
receive cytometric data for a sample in a flow stream comprising one or more data signals generated by a photodetector in response to detecting light from a particle in the sample;
generate a plot of the cytometric data, wherein the plot is generated by:
transforming the data signals into quantitative intensity units for representation on an axis of the plot expressed in the quantitative units;
determining a minimum and maximum intensity value of a detection range of the photodetector on the quantitative unit axis, the minimum and maximum values corresponding to the lowest and highest intensity levels defined by a bit-depth of the photodetector; and
indicating the minimum and maximum intensity values of the detection range on the quantitative unit axis of the plot; and
display the plot of cytometric data generated for the sample on a visual display.
